# EUROPEAN PATENT APPLICATION

(11) **EP 3 457 332 A1**
(43) Date of publication of application: **20.03.2019**
(21) Application number: 17190976.5
(22) Date of filing: 13.09.2017
(51) Int. Cl.: G06N 3/04, G06F 17/27

(54) **NATURAL LANGUAGE PROCESSING**

(71) Applicant: Creative Virtual Ltd, London E14 4AS (GB)
(72) Inventor: Voß, Olaf, 21029 Hamburg (DE)
(74) Representative: Bawden, Peter Charles

(57) **Abstract**

A system for natural language processing is disclosed. The system comprises a pattern-matching stage (22) that is operative to receive NLP data (10) that encodes natural language and to test the NLP data against a set of patterns to generate a set of injection data that includes IDs belonging to matching patterns. In addition, it comprises a neural network stage (14) that has: an input layer (36) operative to receive the NLP data and the injection data; an output layer (46); and a plurality of hidden layers (42) operative to receive and process data from the input layer and deliver it to the output layer. It has been found that the two systems when used in combination provide high-quality of categorisation without the need for such extensive training data as would be required by a system that operates using a neural network only.

## Description

The present invention relates to natural language processing.

Natural language processing (NLP) is the technique of processing human language by machine to extract meaning from the language. It is an essential component of computer-based systems that are capable of interacting with humans using human language. A key part of NLP is "intent classification", where natural language text is analysed to determine what the originator of the text intended it to convey or sorting a user input into the best matching one of a previously defined set of intent classes.

There are two main ways in which intent classification is performed at present: through the use of pattern matching and through use of artificial neural networks.

The use of pattern matching methods for undertaking natural language processing intent classification tasks is well known. Such methods offer very precise control, but require a lot of effort to set up the rules required for a specific problem, this being, in general, something that must be done manually. This burden can be lessened to some degree if partial patterns that can be used as building blocks across many problems are derived in advance, but even in that case, the effort required to assemble the final patterns out of such already existing building block patterns is considerable.

Another well-known approach to natural language processing problems uses neural networks. These can be automatically trained and consequently can be used with little if any manual effort provided that enough training data of adequate quality is available. However, in practice, often the problem is that the amount of training data with sufficient quality is not enough for successfully training a neural network.

An aim of this invention is to provide an improved system for NLP that ameliorate the problems with known NLP systems.

To this end, from a first aspect, the invention provides a system for natural language processing comprising: a pattern-matching stage that is operative to receive NLP data that encodes natural language and to test the NLP data against a set of building block patterns to generate a set of injection data that includes IDs belonging to matching patterns; and a neural network stage that has: an input layer operative to receive the NLP data and the injection data; an output layer; and a plurality of hidden layers that receive and process data from the input layer and deliver it to the output layer.

It has been found that the two systems when used in combination provide high-quality of categorisation without the need for such extensive training data as would be required by a system that operates using a neural network only.

The NLP data may be simply encoded as text.

The set of patterns used in a system embodying the invention is typically a restricted and generic set of building block patterns for matching expected patterns within the NLP data. This avoids the onerous task of providing a comprehensive set of task-specific patterns. Likewise, the neural network in embodiments of the invention can typically be trained with a set of training data that is smaller than that which would be required to enable a neural network alone to classify the NLP data with sufficiently high accuracy for an intended application, thereby reducing the number of training examples required.

The neural network stage typically includes a plurality of hidden layers. In one arrangement, both injection data and NLP data are processed by each of the hidden layers. Alternatively, one or more hidden layer processes only NLP data. Such layer or layers may include a convolutional and pooling layer or an LSTM layer. One or more hidden layer may process only injection data. The layer that processes only injection data may be a fully-connected layer. One or more shared layer may be used to merge the data flow before the output layer.

From a second aspect, this invention provides a method of classification in natural language processing, comprising: a. encoding a natural language input; b. using a pattern-matching technique on the natural language input to generate injection data; c. supplying the encoded natural language and the injection data to the input of a trained neural network; and d. using the neural network to analyse the natural language data and the injection data to classify the natural language input.

In step a., the natural language input may be encoded in text.

The method may further include creating of a set of patterns for use in step b. to at least partially identify concepts in the natural language input. Typically, it will also comprise a step of at least partially training the neural network to classify the natural language input.

Embodiments of the invention will now be described in detail, by way of example, with reference to the accompanying drawings, in which:
Figure 1 is a block diagram of an NLP system being a first embodiment of the invention; and
Figure 2 is a block diagram of an alternative neural network arrangement in NLP system being a second embodiment of the invention.

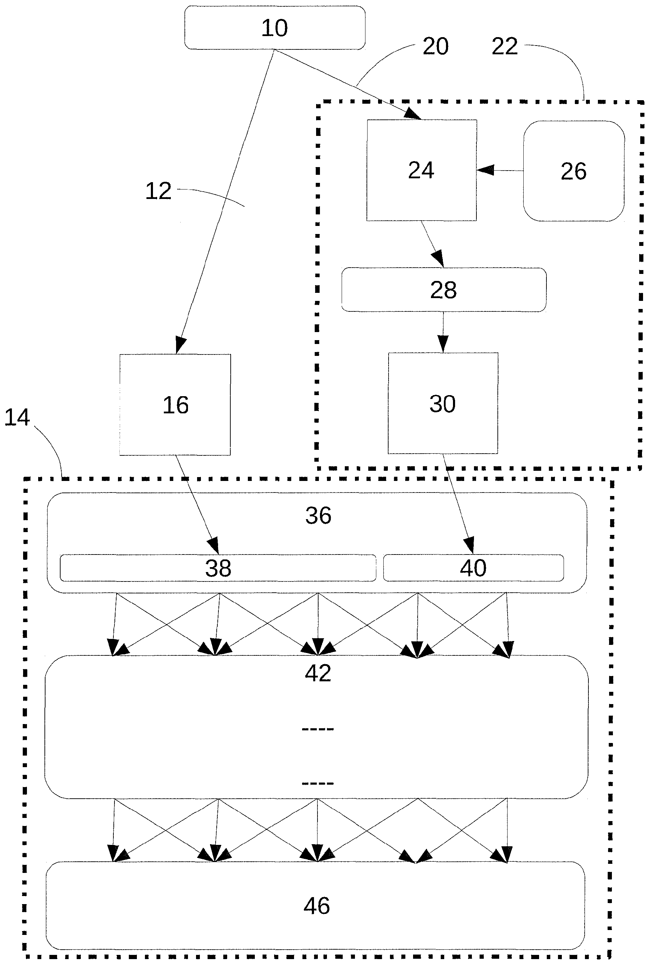

With reference to Figure 1, in an embodiment of the invention, a file or stream of encoded natural language data 10 is delivered in one path 12 directly to a neural network system 14 through a processing stage 16 that converts the data to a form appropriate for the input to the neural network system 14.

The natural language data 10 is also delivered by a second path 20 to a pattern-matching system 22. Within the pattern-matching system, the language data 10 is subject to a matching process 24 against a set of building block patterns 26 to generate a set of pattern-based injection data 28. The injection data 28 is converted at 30 to a form appropriate for the input to the neural network system 14.

The neural network system 14 comprises an input layer 36 that includes two sections: a natural language input section 38 and a pattern-based input section 40. The outputs from the two sections 38, 40 of the input layer is fed to a stack of multiple processing layers 42. Finally, the outputs of the layer stack are combined in an output layer 46 that generates an output stream that creates an output stream of data that characterises the intent expressed within the natural language data 10.

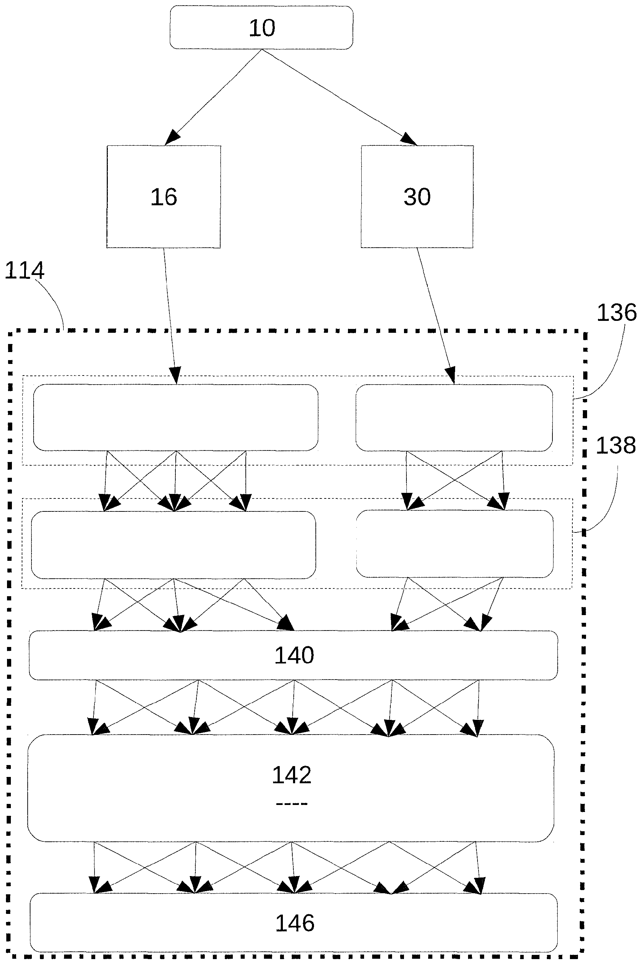

Since the two parts of the neural network input are structurally different, a variant of this embodiment uses a neural network system 114 that has an architecture shown in Figure 2. that keeps two data paths separate for some layers 136, 138 within the network before joining them in a merging layer 140 prior to processing by hidden layers 142 and output at 146. This allows for example the use of convolutional and pooling layers for the NLP data and fully connected layers for the injection data.

As this expanded network is trained it will learn features based on the normal NLP input as well as pattern based injection data. When, after training, it is confronted with an input that shares very few features on the normal NLP input side, it still has the chance to produce a good output based on the injected data features.

### Example

Let's consider a question answering system dealing with the topic of animal welfare. Specifically, the system should be able to recognise (amongst many other things) if the user is asking about the best food for puppies that are ill.

In traditional pattern matching system, there are probably building blocks available for the concepts FODDER, PUPPY and ILLNESS. For example, PUPPY would correspond to the terms 'puppy', 'pup', 'whelp' and 'young dog'.

The specific pattern for the question type this system might be expected to analyse with would look roughly like this (over-simplifying and ignoring concrete pattern syntax):
'what FODDER PUPPY ILLNESS'

This method works well, but requires a significant investment of time from someone of significant knowledge and experience to create the rules that define all of the expected input classes.

In the deep learning approach that makes use of a neural network, this would be tackled by having multiple example sentences with the same meaning as training data, say:
- What should I feed my ill puppy?
- My pup is unwell, what should it eat?
- Is special food required for whelps with an illness?

The training examples (for all classes of which only one example is discussed here) and the corresponding classes are fed into the neural network for training. After training, the network is expected to be able to classify correctly inputs that are similar to, but not actually included in, the training data.

This works very well if enough training examples of good quality are available. There are examples in known literature that give the number of 5000 training examples for each class as an adequate number for classification tasks. Getting that many training examples can be difficult and/or expensive.

If just the three training examples given above were available, the network would probably have no chance of predicting the class correctly if the input contained, for instance, 'young dog' instead of'puppy', since the term 'young dog' is not used in any of the examples.

The system embodying the invention works in the following way:
The system is based on the following data:
   - a set of well tested building block patterns; and
   - multiple example sentences for each intent class.

To keep the example presented here small enough to be manageable, assume the complete list of building block patterns is this:
CAT = cat | kitten
FODDER = fodder | food | feed
ILLNESS = ill | illness | unwell | injured | injury | health problem
PUPPY = puppy | pup | whelp | young dog
SNAKE = snake serpent

Here the | is assumed to have the meaning of a logical or-operator. Therefore, the CAT pattern would match against any input containing the word 'cat' or containing the word 'kitten'.

In this example only one intent class will be considered, which deals with asking about nutrition for puppies with health problems. The example sentences are:
- What should I feed my ill puppy?
- My pup is unwell, what should it eat?
- Is special food required for whelps with an illness?

Before using an example sentence for training the neural network it is pre-processed.

The sentence is first tokenised. The process of tokenisation is one of lexical analysis that classifies sections of the input text to create a list of tokens that each represent a logical component within the input text. The output of the first example input would be a list of tokens that takes the following form: ('what', 'should', 'I', 'feed', 'my', 'ill', 'puppy')

A word embedding is used to turn the input into a list of real-valued vectors. Word embedding is a technique familiar to those knowledgeable of the field of artificial neural network based NLP in which words from a vocabulary are mapped to vectors of real numbers. It can be considered as involving a mathematical embedding from a space with one dimension *per* vocabulary word to a continuous vector space with much lower dimension, the dimension being 3 in this example. The result in this example might look like this:
([0.23, 0.54, 0.77], [0.13, 0.24, 0.37], [0.43, 0.55, 0.67], [0.27, 0.84, 0.97], [0.03, 0.24, 0.67], [0.13, 0.84, 0.47], [0.43, 0.94, 0.07])

### List 1

To present an example that is not excessively large, this example is based on the assumption that a 3-dimensional word embedding has been used. In practice, this is unrealistic. In a practical example, the number of dimensions might typically be in the hundreds.

The list is padded with additional zero-valued vectors so it matches a maximum supported sentence length (10 in this example):
([0.23, 0.54, 0.77], [0.13, 0.24, 0.37], [0.43, 0.55, 0.67], [0.27, 0.84, 0.97], [0.03, 0.24, 0.67], [0.13, 0.84, 0.47], [0.43, 0.94, 0.07], [0.00, 0.00, 0.00], [0.00, 0.00, 0.00], [0.00, 0.00, 0.00])

### List 2

The example sentence (in this case 'What shall I feed my ill young dog?') is tested against all building block patterns with this outcome:
CAT: false
FODDER: true
ILLNESS: true
PUPPY: true
SNAKE: false

This is translated into a simple binary vector with a value of 1 at each index where the corresponding pattern is matched and a value of 0 where there is no match. The vector, in this case, is as follows: [0,1,1,1,0].

This vector is appended to the List 2 above:
([0.23, 0.54, 0.77], [0.13, 0.24, 0.37], [0.43, 0.55, 0.67], [0.27, 0.84, 0.97], [0.03, 0.24, 0.67], [0.13, 0.84, 0.47], [0.43, 0.94, 0.07], [0.00, 0.00, 0.00], [0.00, 0.00, 0.00], [0.00, 0.00, 0.00], [0,1,1,1,0])

### List 3

This list of vectors is flattened, so finally the sentence has been turned into a list of numbers that can be can be consumed by a neural network:
(0.23, 0.54, 0.77, 0.13, 0.24, 0.37, 0.43, 0.55, 0.67, 0.27, 0.84, 0.97, 0.03, 0.24, 0.67, 0.13, 0.84, 0.47, 0.43, 0.94, 0.07, 0.00, 0.00, 0.00, 0.00, 0.00, 0.00, 0.00, 0.00, 0.00, 0, 1, 1, 1, 0)

### List 4

This process is repeated for all training examples of all intent classes.

Consider a simple feedforward neural network with a single hidden layer and a softmax output layer trained with gradient descent and backpropagation in this example.

The input layer has 35 nodes, being the number of embedding dimensions multiplied by the maximum sentence length plus number of building block patterns. The hidden layer can have any size, for example 10 nodes. The output layer has one node *per* intent class. The output for a specific class can be interpreted as the predicted likelihood of that class being the correct one for the given input.

The network is trained with the pre-processed input data as described above and the correct intent classes, the classes being presented in a one-hot encoding. Since all examples for the 'nutrition for puppies with health problems' class has a 1 at the 4^{th} index of the vector derived from the pattern-matching process, the network will learn to associate that occurrence with the 'nutrition for puppies with health problems' class to some degree.

After the network has been trained, it can be used to determine the intent class for new user inputs. Consider the input 'What food to use for my injured young dog'. The same preprocessing as described above is done on this sentence and it is sent through the network. Since the input contains 'young dog' it matches the PUPPY building block pattern and consequently its encoding has 1 at index 4. This significantly increases the likelihood of this input being correctly classified, in spite of 'young dog' appearing nowhere in the training data for the neural network. Thus, the effectiveness of the neural network is enhanced by pattern matching, with the result that the combined system is substantially more effective than would be the case if just one of these two techniques were used in isolation.

## Claims

1. A system for natural language processing comprising:
a. a pattern-matching stage that is operative to receive NLP data that encodes natural language and to test the NLP data against a set of patterns to generate a set of injection data that includes IDs belonging to matching patterns; and
b. a neural network stage that has:
i. an input layer operative to receive the NLP data and the injection data;
ii. an output layer; and
iii. a plurality of hidden layers operative to receive and process data from the input layer and deliver it to the output layer.

2. A system according to claim 1 in which the natural language is encoded as text.

3. A system according to claim 1 or claim 2 in which the set of patterns is a set of building block patterns for matching expected patterns within the NLP data.

4. A system according to any preceding claim in which the neural network is trained with a set of training data that is smaller than that which would be required to enable the neural network alone to classify the NLP data with sufficiently high accuracy for an intended application of the system.

5. A system according to any preceding claim in which the neural network stage includes a plurality of hidden layers.

6. A system according to claim 5 in which each of the hidden layers is operative to process both injection data and NLP data.

7. A system according to claim 5 in which one or more hidden layer is operative to process only NLP data.

8. A system according to claim 7 in which the one or more hidden layers operative to process only NLP data includes a convolutional and pooling layer.

9. A system according to claim 6 or claim 7 in which the one or more hidden layers includes an LSTM layer.

10. A system according to claim 5, or claims 7 to 9 in which one or more hidden layer is operative to process only injection data.

11. A system according to claim 10 in which the one or more hidden layer that is operative to process only injection data is a fully-connected layer.

12. A system according to any one of claims 7 to 11 in which one or more shared layer is operative to merge the data flow before the output layer.

13. A method of classification in natural language processing, comprising:
a. encoding a natural language input;
b. using a pattern-matching technique on the natural language input to generate injection data;
c. supplying the encoded natural language and the injection data to the input of a neural network; and
d. using the neural network to analyse the natural language data and the injection data to classify the natural language input.

14. A method according to claim 13 in which the natural language input is encoded as text.

15. A method of classification according to claim 13 or claim 14 further including creating of a set of pattern for use in step b. to at least partially classify building blocks in the natural language input.

16. A method of classification according to any one of claims 13 to 15 comprising a step of at least partially training the neural network to classify the natural language input.
